# EUROPÄISCHE PATENTANMELDUNG

(11) **EP 4 324 612 A1**
(43) Veröffentlichungstag der Anmeldung: **21.02.2024**
(21) Anmeldenummer: 23191774.1
(22) Anmeldetag: 16.08.2023
(51) Int. Cl.: B29B 9/06, B29B 13/06, F26B 13/30, B29C 48/00

(54) **SAUGVORRICHTUNG ZUM TROCKNEN MINDESTENS EINES KUNSTSTOFFSTRANGS**

(30) Priorität: 19.08.2022 DE 102022121045
(71) Anmelder: Maag Germany GmbH, 63762 Großostheim (DE)
(72) Erfinder: SCHEURICH, Jochen, 63843 Niedernberg (DE)
(74) Vertreter: Puschmann Borchert Kaiser Klettner Patentanwälte Partnerschaft mbB

(57) **Zusammenfassung**

Saugvorrichtung (10) zum Trocknen mindestens eines Kunststoffstrangs, umfassend ein Sauggehäuse (14), bestehend aus einer Oberseite, einer Unterseite und mehreren Seitenflächen (14a, 14b, 14c), wobei die Oberseite eine Einlassöffnung und eine der weiteren Flächen eine Auslassöffnung (28) für das Durchströmen eines Trocknungsmediums aufweist, einem Siebelement (32) mit einem Trocknungsbereich, in dem verteilt Durchgangsöffnungen (34) eingebracht sind und der eine Grundfläche aus einer maximalen Länge und einer maximalen Breite aufweist, wobei jede Durchgangsöffnung (34) eine Öffnungsquerschnittsfläche aufweist und die Summe der Öffnungsquerschnittsflächen aller Durchgangsöffnungen des Siebelements (32) zusammen eine Gesamtöffnungsquerschnittsfläche bildet, wobei das Siebelement (32) an der Oberseite und mit seinem Trocknungsbereich über der Einlassöffnung des Sauggehäuses (14) angeordnet ist, wobei der mindestens eine Kunststoffstrang in einer Prozessrichtung (12) auf dem Siebelement (32) bewegt ist, wobei die Prozessrichtung (12) in einer Längsrichtung des Siebelements (32) ausgerichtet ist.

## Beschreibung

Die Erfindung betrifft eine Saugvorrichtung zum Trocknen mindestens eines Kunststoffstrangs gemäß der im Oberbegriff des Anspruches 1 angegebenen Art.

Bei der Kunststoffgranulatherstellung wird nach der Polymerisierung der Kunststoff im Extruder als Schmelze durch Düsen gedrückt. Aus den Düsen kommen Kunststoffstränge, die nun in Wasser abgekühlt werden. Bevor die Kunststoffstränge granuliert werden, muss das Oberflächenwasser des Kunststoffstrangs über ein Trocknungsverfahren entfernt werden. Grundsätzlich sind zwei verschiedene Arten von Trocknungsverfahren, also der Entfernung von Oberflächenwasser, bekannt. Zum einen ist eine Vorrichtung bekannt, welche mittels eines Blas-Vorgangs die Kunststoffstränge trocknet und somit das Oberflächenwasser entfernt. Zum anderen ist eine Saugvorrichtung bekannt, welche mittels eines Saug-Vorgangs die Kunststoffstränge trocknet.

Eine solche Saug-Vorrichtung betrifft die Erfindung und ist schon seit längerem bekannt. Hierbei werden die Kunststoffstränge über ein ebenes Siebelement geführt. Ein derartiges Siebelement, auch Spaltsieb genannt, besteht beispielsweise aus einer Vielzahl von 2,2 mm breiten Stäben, welche seitlich jeweils auf einem gemeinsamen Tragstab aufgeschweißt sind. Derartige Siebelemente weisen dabei zwischen den Stäben einen Spalt von 1,2 mm auf. Diese Spalte erstrecken sich dabei durchgängig über die gesamte Breite des Siebelements. Der wirksame Trocknungsbereich ist dabei die gesamte Grundfläche des Siebelements. Nachteilig an diesen bekannten Siebelementen ist, dass diese sehr empfindlich gegen mechanische Einwirkung sind und bei einer regelmäßig notwendigen Reinigung leicht beschädigt werden können.

Die bekannte Saugvorrichtung weist weiterhin ein Gehäuse in Form eines Saugkastens auf, auf dessen Oberseite das Siebelement aufliegt. Die Kunststoffstränge werden während des Betriebs zum Trocknen über das Siebelement gefördert. Das Siebelement ist unterhalb mit einem Absaugkanal verbunden, durch den Absaugluft strömt. Die Absaugluft wird von der Atmosphäre über die Kunststoffstränge auf dem Siebelement, durch die Spalte des Siebelements durch einen Absauglüfter angesaugt und weiter gefördert. Der Absaugluftstrom wird regelmäßig einem Wasserabscheider zugeführt, bevor der Absaugluftstrom in die Atmosphäre austritt.

Die Breite der Siebelemente variiert von ca. 50 mm für den Laborbetrieb, über 100 mm bis 900 mm für die Serienproduktion. Die Länge der Siebelemente ist dabei fast durchgängig auf 100 mm beschränkt. Ziel bei den Saugvorrichtungen ist es, dass der Luftstrom an den Kunststoffsträngen eine sehr hohe Luftgeschwindigkeit von bis zu 50 m/s aufweist, um den anhaftenden Wasserfilm abzureißen und das Oberflächenwasser zu entfernen.

Nachteilig an dieser bekannten Saugvorrichtung ist, dass die Kunststoffstränge nicht zwingend durchgehend während des Durchlaufens der Vorrichtung auf dem Siebelement aufliegen. Dies hat zur Folge, dass dort, wo die Kunststoffstränge nicht auf dem Siebelement aufliegen, die Geschwindigkeit des Saugluftstroms am Kunststoffstrang deutlich geringer ist, wodurch sich die Trocknungsleistung verschlechtert.

Aus diesem Grund wurde ein Abdeckelement vorgesehen, bei dem die Luft vorne und hinten eintritt, also dort wo der Kunststoffstrang in die Vorrichtung hinein und aus der Vorrichtung wieder heraus gefördert wird, genauer gesagt, dort wo der Kunststoffstrang auf das Siebelement gefördert und von dem Siebelement wieder herunter befördert wird. Hierdurch entsteht ein Strömungskanal zwischen Abdeckelement und dem Siebelement sowie durch das Siebelement hindurch. Diese Maßnahme hat die Trocknungsleistung verbessert, da in diesem Strömungskanal auch bei nicht auf dem Siebelement aufliegenden Kunststoffsträngen eine genügend hohe Luftgeschwindigkeit an den abgehobenen Kunststoffsträngen anliegt.

Die Siebelemente haben in der Regel einen Öffnungsquerschnitt (offene Fläche), welcher zwischen 30 und 45 %, insbesondere zwischen 35 und 40 % der Grundfläche des Trocknungsbereichs des Siebelements liegt und die benötigte Geschwindigkeit von bis zu 50 m/s ergibt, die mit einem möglichst geringen und energieeffizienten Luftvolumenstrom des Absauglüfters erzeugt wird. Bei den bekannten Siebelementen ist die Grundfläche des Trocknungsbereichs mit der Grundfläche identisch oder im Wesentlichen identisch.

Nachteilig an diesen bekannten Saugvorrichtungen ist jedoch, dass auch hier die Trocknung nicht optimal ist, da die Verweilzeit der Kunststoffstränge auf dem Siebelement sehr kurz ist und das anhaftende Wasser nicht vollständig in dieser Verweilzeit entfernt werden kann.

Der Erfindung liegt daher die Aufgabe zugrunde, eine Saugvorrichtung gemäß der im Oberbegriff des Anspruches 1 angegebenen Art derart weiterzubilden, dass unter Vermeidung der genannten Nachteile die Effektivität der Trocknung in der Vorrichtung auf einfache Weise erhöht wird.

Diese Aufgabe wird durch die kennzeichnenden Merkmale des Anspruches 1 in Verbindung mit seinen Oberbegriffsmerkmalen gelöst.

In bekannter Art und Weise weist eine Saugvorrichtung zum Trocknen mindestens eines Kunststoffstrangs ein Sauggehäuse auf. Dieses besteht aus einer Oberseite, einer Unterseite und mehreren Seitenflächen. Die Oberseite weist eine Einlassöffnung und eine der weiteren Flächen eine Auslassöffnung für das Durchströmen eines Trocknungsmediums auf. Des Weiteren weist die Saugvorrichtung ein Siebelement mit einem Trocknungsbereich auf, in dem verteilt Durchgangsöffnungen eingebracht sind. Der Trocknungsbereich weist eine Grundfläche aus einer maximalen Länge und einer maximalen Breite auf. Dabei ist jede Durchgangsöffnung mit einer Öffnungsquerschnittsfläche versehen. Die Summe der Öffnungsquerschnittsflächen aller Durchgangsöffnungen des Siebelements bildet eine Gesamtöffnungsquerschnittsfläche. Das Siebelement ist an der Oberseite angeordnet und ist mit seinem Trocknungsbereich über der Einlassöffnung des Sauggehäuses angeordnet. Der mindestens eine Kunststoffstrang wird in einer Prozessrichtung auf dem Siebelement bewegt. Die Prozessrichtung ist in einer Längsrichtung des Siebelements ausgerichtet. Erfindungsgemäß beträgt die Länge des Trocknungsbereichs zumindest 150 mm und ein Verhältnis von Gesamtöffnungsquerschnittsfläche der Durchgangsöffnungen zur Grundfläche des Trocknungsbereichs liegt im Bereich von 30 - 45%, insbesondere 35 - 40% des Trocknungsbereichs.

Durch die Länge des Siebelements und das Verhältnis von Gesamtöffnungsquerschnittsfläche der Durchgangsöffnungen zur Grundfläche des Trocknungsbereichs können höhere Strömungsgeschwindigkeiten über die gesamte Länge des Trocknungsbereichs mit gleichzeitig längerer Verweilzeit im Bereich des Kunststoffstrangs erreicht werden. Die Trockenleistung für den Kunststoffstrang wird dadurch bei gleichem Absaugstrom und Motorleistung des Absauglüfters sehr energieeffizient verbessert.

Bevorzugt beträgt die Länge des Trocknungsbereichs zumindest 200 mm und das Verhältnis von Gesamtöffnungsquerschnitt der Durchgangsöffnungen zur Grundfläche des Trocknungsbereichs weiterhin 35 - 40%, insbesondere 35 - 40% liegt. Durch diese Parameter wird die maximale Strömungsgeschwindigkeit bei deutlich höherer Verweilzeit und somit die beste Trockenleistung für den mindestens einen Kunststoffstrang erreicht.

Um keinen Bauraum zu verschwenden, sind die Grundfläche des Trocknungsbereichs des Siebelements und eine Grundfläche des Siebelements identisch oder nahezu identisch.

Gemäß einer weiteren vorteilhaften Ausbildungsform der Erfindung sind die Durchgangsöffnungen schlitzförmig ausgebildet. Hierbei weisen die Durchgangsöffnungen eine größere Länge als Breite auf. Durch die schlitzförmige Ausbildung der Durchgangsöffnungen wird die Strömungsgeschwindigkeit durch den sogenannten *"Air-Knife Effekt"* bzw. *"Luftklingen-Effekt"* stark erhöht.

Bevorzugt ist die Länge der Durchgangsöffnungen quer zur Prozessrichtung ausgebildet. Sukzessive wird beim Bewegen des Kunststoffstrangs oder der Kunststoffstränge mehrfache einem Absaugstrom ausgesetzt und dadurch gründlich entwässert.

Vorzugsweise ist die Länge einer Durchgangsöffnung kleiner als die Breite des Trocknungsbereichs. Hierdurch kann der Absaugstrom besser im Trocknungsbereich verteilt eingestellt werden.

Bevorzugt weisen die Durchgangsöffnungen eine Breite in einem Bereich von einschließlich 2 mm bis einschließlich 5 mm auf. Hierdurch wird eine höhere Kerngeschwindigkeit der Luftströmung ermöglicht. Zudem ist aufgrund der höheren Stabilität des Siebelements ein einfacheres Reinigen möglich als bei einem aus dem Stand der Technik bekannten filigranen Spaltsieb.

Gemäß einer weiteren vorteilhaften Ausbildungsform der Erfindung sind die Durchgangsöffnungen quer zur Prozessrichtung nebeneinander ausgerichtet.

Vorzugsweise sind mehrere Reihen von Durchgangsöffnungen vorgesehen, welche in ihrer Längsrichtung zueinander parallel ausgerichtet sind.

Eine parallele Ausrichtung der Durchgangsöffnungen ermöglicht eine gezielte und gleichmäßige Führung der Luftströme durch die Durchgangsöffnungen und ein kontinuierliches Überströmen des Kunststoffstrangs bzw. der Kunststoffstränge mit dem Absaugstrom.

Bevorzugt weisen nebeneinander angeordnete Durchgangsöffnungen einen Abstand in einem Bereich von einschließlich 8 mm bis einschließlich 30 mm auf.

Vorzugsweise weisen die Reihen von Durchgangsöffnungen einen Abstand in einem Bereich von einschließlich 0 bis einschließlich 50 mm auf.

Durch die bestimmten Abstände wird eine gleichmäßige Verteilung im Trocknungsbereich gewährleistet.

Gemäß einer weiteren vorteilhaften Ausbildungsform der Erfindung ist das Siebelement aus einem Blech ausgebildet. Hierdurch wird eine stabilere und robustere Ausführung realisiert, die einer Beschädigung beim Reinigen des Siebelements entgegenwirkt.

Um die Robustheit für die Reinigung des Siebelements weiter zu erhöhen, ist das Siebelement aus einem nicht rostenden Stahl, insbesondere Edelstahl oder gehärtetem Stahl gebildet. Zudem wird auch die Korrosion aufgrund von Wassereinwirkung auf das Siebelement weitestgehend unterbunden.

Bevorzugt sind die Durchgangsöffnungen mittels eines Lasers in das Siebelement eingebracht. Mittels eines Lasers kann eine exakte Ausbildung der Durchgangsöffnungen geschaffen werden. Zudem ist dieses Verfahren materialsparend.

Vorzugsweise ist das Siebelement mehrteilig ausgebildet. Dabei sind die Teilelemente sandwichartig übereinandergelegt. Hierdurch lässt sich die Fläche der Durchgangsöffnungen einstellen. Bei Verschleiß können die Teilelemente einfach untereinander gewechselt werden.

Um einen Strömungskanal zwischen dem Siebelement und dem Abdeckelement zu erzeugen und somit die Strömungsgeschwindigkeit zu erhöhen, ist ein den gesamten Trocknungsbereich des Siebelements an der Einlassöffnung entfernt gelegene Seite des Siebelements überdeckendes Abdeckelement vorgesehen, wobei das Abdeckelement oberhalb des Siebelements sowie in einem vorbestimmten Abstand zum Siebelement angeordnet ist.

Bevorzugt ist das Abdeckelement an seinen Längsseiten mit dem Sauggehäuse luftdicht verbunden. Hierdurch wird ein Strömungskanal durch das Abdeckelement, die Längsseiten und das Sauggehäuse über dem Siebelement gebildet.

Gemäß einer weiteren vorteilhaften Ausführungsform der Erfindung ist im Abdeckelement mittig in Bezug auf eine Länge des Abdeckelements ein quer zur Prozessrichtung verlaufenden Lüftungsschlitz vorgesehen, so dass das Trocknungsmedium an dem einen Ende des Abdeckelements zwischen Abdeckelement und Siebelement, an dem anderen Ende des Abdeckelements zwischen Abdeckelement und Siebelement sowie über den Lüftungsschlitz in den Trocknungsbereich strömen kann. Durch den mittigen Schlitz in dem Abdeckelement wird mit dem Siebelement und dem Strömungskanal ein Jeteffekt generiert, wodurch die Strömungsgeschwindigkeit weiter zielgerichtet am Kunststoffstrang erhöht wird. Der Jeteffekt durch diese sogenannte "Falschluftansaugung" kann noch zusätzlich durch eine über die Breite wirkende, integrierte schlitzförmige Druckluftblasdüse verstärkt werden.

Vorzugsweise weist der Lüftungsschlitz einen Öffnungsquerschnitt auf, der 35 - 45 % der Grundfläche des Trocknungsbereichs des Siebelements / Abdeckelements entspricht. Insbesondere weist der Lüftungsschlitz eine Breite von 4-5 mm und eine Länge von 40 - 50 mm auf. Hierdurch wird mit einem gegebenen Saugluftvolumenstrom eine Geschwindigkeit von 45 - 55 m/s erzielt.

Bevorzugt ist die Grundfläche der Oberseite des Sauggehäuses größer als die Grundfläche der Unterseite des Sauggehäuses. Durch die Verkleinerung des Querschnitts des Sauggehäuses im unteren Teil des Sauggehäuses, wird die Strömungsgeschwindigkeit nach dem Venturi-Effekt zusätzlich erhöht und ein schneller Abtransport der feuchten Abluft ermöglicht.

Um eine Luftbewegung, also den Absaugstrom, in der Saugvorrichtung zu erzeugen, ist eine Absaugeinheit vorgesehen, die Trocknungsmedium, insbesondere Umgebungsluft, durch die Einlassöffnung in das Sauggehäuse und durch die Auslassöffnung aus dem Sauggehäuse fördert.

Gemäß einer weiteren vorteilhaften Ausbildungsform der Erfindung ist die Saugeinheit außerhalb des Sauggehäuses angeordnet. Hierdurch ist die Saugeinheit leicht zugänglich und der Bauraum des Sauggehäuses kann reduziert werden.

Vorzugsweise ist das Sauggehäuse mit einem Wasserabscheider in Strömungsrichtung stromabwärts verbunden. Hierdurch kann das im Sauggehäuse befindliche Wasser außerhalb des Sauggehäuses entsorgt werden.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine perspektivische Ansicht der Saugvorrichtung nach der Erfindung von schräg oben;
- Fig. 2: eine Seitenansicht der Saugvorrichtung von Fig. 1 mit angedeuteten Linien der innenliegenden Konstruktion;
- Fig. 3: eine Draufsicht der Saugvorrichtung von Fig. 1;
- Fig. 4: eine Vorderansicht der Saugvorrichtung von Fig. 1 mit Schnittlinie A-A;
- Fig. 5: eine Schnittansicht entlang der Schnittlinie A-A der Saugvorrichtung nach Fig. 4, und;
- Fig. 6: eine Draufsicht des Siebelements der Saugvorrichtung nach der Erfindung.

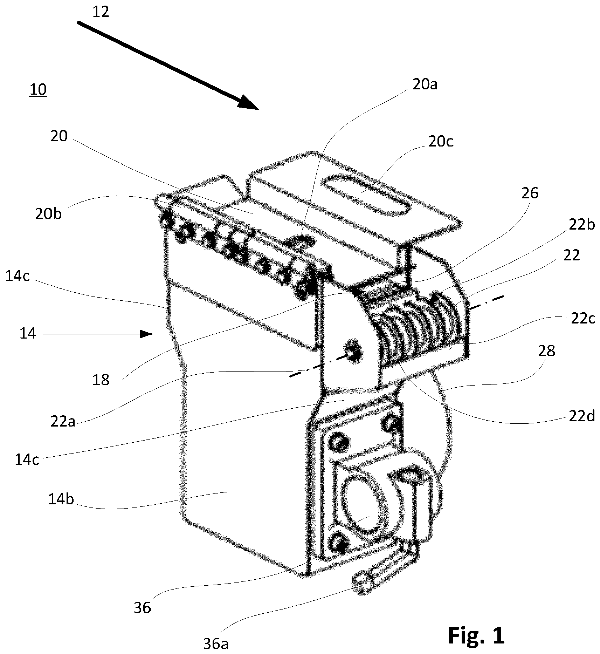

Die Fig. 1 bis 5 zeigen jeweils eine Saugvorrichtung 10 mit einem Saugkörper 14, einem Absaugkanal 28, einem Förderelement 22 zur Förderung von Kunststoffsträngen, einem Deckel 20 und einem Siebelement 32.

Die Fig. 1 zeigt eine perspektivische Ansicht der Saugvorrichtung 10 von schräg oben.

Der Saugkörper 14 weist dabei eine Vorderwand 14a, eine Rückwand 14b und zwei Seitenwände 14c auf. Auf der Oberseite des Saugkörpers 14 ist das Siebelement 32 angeordnet, dass über eine Öffnung in der Oberseite mit dem Saugkörper 14 strömungstechnisch verbunden ist. Der Saugkörper 14 weist auf der Oberseite eine größere Querschnittsfläche auf als auf der Unterseite.

Der Saugkörper 14 ist an einer Seitenwand 14c das Förderelement 22 zur Förderung von Kunststoffsträngen auf. Das Förderelement 22 rotiert um eine Rotationsachse 22a. Das Förderelement 22 ist zylindrisch ausgebildet, wobei die Zylinderoberfläche 22d sich jeweils entlang der Rotationsachse 22a erstreckt. Das Förderelement 22 umfasst mehrere auf der Zylinderoberfläche 22d nebeneinander in einem Abstand zur nächstliegenden Trennwand angeordnete, umlaufende Trennwände 22b. Hierdurch werden mehrere in das Förderelement 22 eingebrachte Kunststoffstränge voneinander getrennt und separat in eine Prozessrichtung 12 bewegt. Das Förderelement 22 wird bereichsweise von einem Gehäuse 22c umgeben.

Unterhalb des Förderelements 22 ist an der dem Förderelement benachbarten Seitenwand 14c ein Verbindungsaufnahme 36 angebracht. Die Verbindungsaufnahme 36 weist dabei ein Befestigungselement 36a auf. Mit dem Befestigungselement 36a kann ein in die Verbindungsaufnahme 36 eingebrachtes Verbindungselement fixiert werden. Dadurch kann die Saugvorrichtung 10 mit einer Produktionsstraße verbunden werden. Die Verbindungsaufnahme 36 ist über mehrere Schraubverbindungen mit dem Saugkörper 14 verbunden.

Der Deckel 20 ist über ein Scharnier 20b mit der Rückwand 14b schwenkbar verbunden. Der Deckel 20 weist eine Deckelöffnung 20b auf. Die Deckelöffnung 20b ist als Schlitz ausgebildet, der orthogonal zur Prozessrichtung 12 verläuft. Die Deckelöffnung 20b ist dabei mittig entlang der Prozessrichtung 12 in Bezug auf die Länge und Breite des Siebelement 32 angeordnet. Der Deckel 20 ist jeweils im Bereich der Seitenwände 14c in einem Winkel derart ausgebildet, dass dieser jeweils schräg nach oben von dem Siebelement 32 weg verläuft.

Der Deckel 20 bildet mit Kanalseitenwänden 26 und dem Siebelement 32 einen Strömungskanal. Der Deckel 20 überdeckt zumindest die Fläche des Siebelements 32 und ist im Wesentlichen parallel zum Siebelement 32 angeordnet. Der Strömungskanal weist eine erste Eingangsöffnung 16 und eine zweite Eingangsöffnung 18 für die Kunststoffstränge auf. Die Umgebungsluft wird dabei durch beide Öffnungen 16, 18 sowie durch die Deckelöffnung 20b durch das Siebelement 32 in den Saugkörper 14 gesaugt.

Im Bereich der Kanalseitenwände 26 liegt der Deckel 20 luftdicht auf den Kanalseitenwänden 26 auf. Die Fläche des Siebelements 32 entspricht dabei einem Trocknungsbereichs. Dieser ist zumindest 150 mm lang, und zwar entlang der Prozessrichtung 12.

Die Deckelöffnung 20b hat einen Öffnungsquerschnitt, der 35 - 45 % der Grundfläche des Trocknungsbereichs entspricht. Die Breite der Deckelöffnung 20b liegt bei 4 - 5 mm und eine Länge von 40 - 50 mm. Die Breite ist dabei entlang der Prozessrichtung 12 ausgebildet und die Länge orthogonal zur Prozessrichtung 12.

Der Saugkörper 14 weist an seiner Vorderwand 14a einen zylindrischen Absaugkanal 28 auf. An dem Absaugkanal 28 können Leitungen bzw. Rohre angebracht werden. Der Absaugkanal 28 ist mit einer hier nicht dargestellten Absaugvorrichtung und schließlich mit einem Wasserabscheider verbunden.

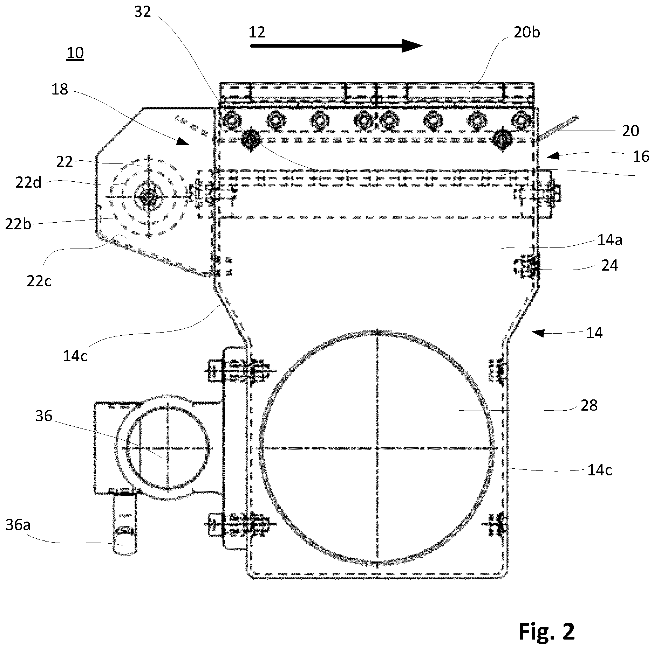

In Fig. 2 ist eine Vorderansicht der Saugvorrichtung 10 dargestellt. Die Figur weist angedeutete Linien eines Schnittes der dahinter befindlichen Bauelemente auf. Im unteren Bereich des Saugkörpers 14 ist der Absaugkanal 28 angeordnet. Am unteren Bereich des Saugkörpers 14 ist ebenfalls die Verbindungsaufnahme 36 mit dem Befestigungselement 36a an der Seitenwand 14c angeordnet. Oberhalb des Absaugkanals 28 ist der Saugkörper 14 im Vergleich zum unteren Bereich verbreitert. Die Wände 14a, 14b, 14c sind jeweils mit Befestigungsmitteln 24 miteinander fest sowie luftdicht verbunden.

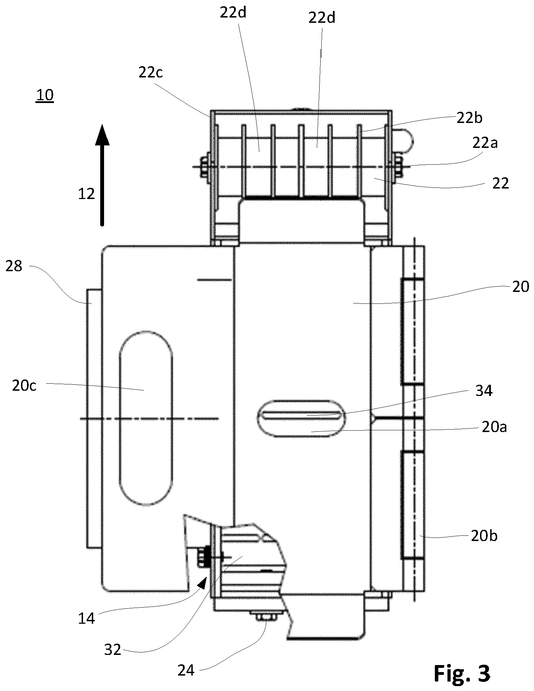

In Fig. 3 ist eine Draufsicht der Saugvorrichtung 10 dargestellt. Der Deckel 20 ist dabei bereichsweise aufgeschnitten dargestellt, siehe unten links. Dadurch ist das unter dem Deckel 20 befindliche Siebelement 32 erkennbar.

Das Siebelement 32 weist Schlitze 34 auf. Die Schlitze 34 sind dabei orthogonal zur Prozessrichtung 12 ausgebildet. Die Schlitze 34 sind in unterschiedlichen Längen ausgebildet. Die Breite der Schlitze 34 ist über das Siebelement 32 gleich ausgebildet. Die Breite verläuft entlang der Prozessrichtung 12 und die Länge orthogonal zur Prozessrichtung 12.

Die Breite der Schlitze 34 ist dabei 4 mm.

Das Siebelement 32 ist vorzugsweise mehrteilig ausgebildet.

Ein Verhältnis von Gesamtöffnungsquerschnittsfläche der Schlitze 34 zur Grundfläche des Trocknungsbereichs, in diesem Fall der Fläche des Siebelements 32, liegt im Bereich von 30 - 45 %, insbesondere 35 - 40%, des Trocknungsbereichs.

Der Deckel 20 weist im Bereich des Vorderwandelements 20 einen Griff 20c auf. Mit dem Griff 20c lässt sich der Deckel 20 über das Scharnier 20b schwenken und öffnen, sodass das Siebelement 23 von oben zugänglich ist. Im geschlossenen Zustand des Deckels 20 ist dieser mit der Vorderwand 14a und der Rückwand 14b luftdicht verbunden.

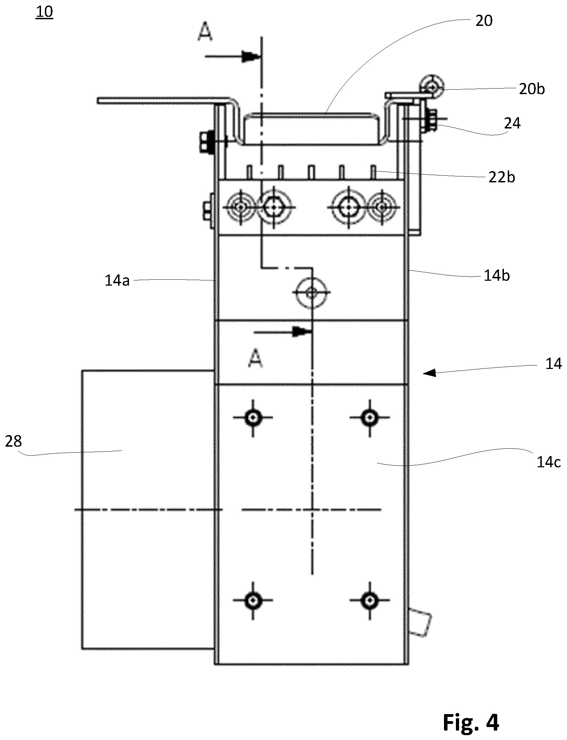

Die Fig. 4 zeigt eine Seitenansicht auf eine Seitenwand 14c mit eingezeichneter Schnittline A-A, wobei der Deckel 20 im geschlossenen Zustand gezeigt ist.

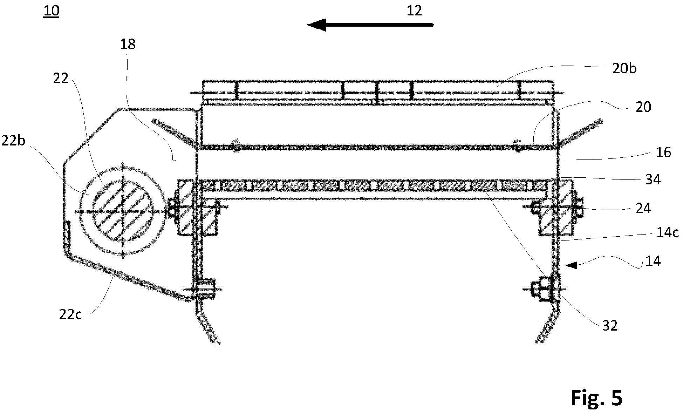

In Fig. 5 ist eine Schnittansicht entlang der Schnittlinie A-A der Saugvorrichtung 10 aus Fig. 4 dargestellt.

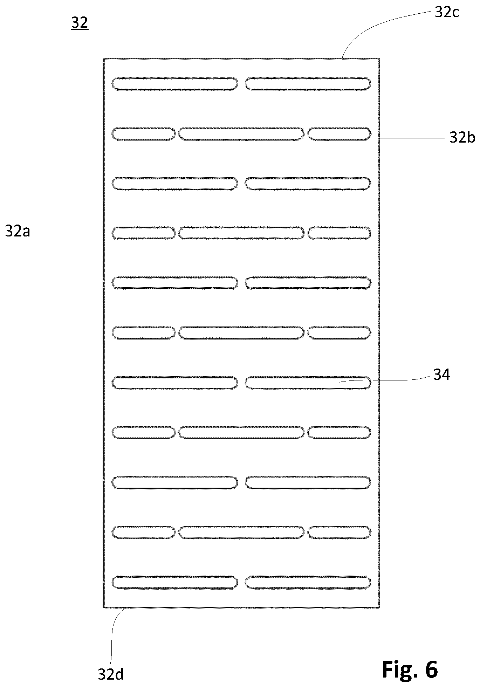

Die Fig. 6 zeigt das Siebelement 32. Die Schlitze 34 sind jeweils in Reihen nebeneinander angeordnet, wobei eine Reihe von einer Längsseite 32a zur anderen Längsseite 32b reicht. Der Abstand zwischen den Reihen ist entlang der Längsseiten 32a, 32b jeweils gleich ausgebildet. Dabei ist von den seitlich äußeren Enden der Schlitze 34 zum Rand der Längsseiten 32a, 32b jeweils ein gleicher Abstand ausgebildet. Des Weiteren ist der Abstand jeweils von den längs liegend äußeren Enden der Schlitze 32 zum Rand der Kopfseiten 32c, 32d jeweils gleich ausgebildet.

Der Abstand zwischen den Reihen von Schlitzen 34 entlang der Prozessrichtung 12 liegt dabei gleichbleibend zwischen 20 - 50 mm. Nebeneinander, quer zur Prozessrichtung 12 liegen die Schlitze 34 jeweils in einem Abstand von 8 - 30 mm.

Das Siebelement 32 ist aus einem Edelstahlblech gebildet, also aus nicht rostendem Stahl geformt. Die Schlitze 24 werden mittels eines Lasers in das Siebelement 32 eingebracht.

Es ist eine nicht-dargestellte Absaugeinheit vorgesehen, die die Umgebungsluft durch die Eingangsöffnung 16 in den Saugkörper 14 und durch den Absaugkanal 28 aus dem Saugkörper 14 in einen Wasserabscheider fördert. Die Absaugeinheit ist außerhalb des Saugkörpers 14 angeordnet.

Durch die geometrische Ausbildung des Saugkörpers 14, die Flächenverhältnisse von Öffnungsquerschnitt der Schlitze 34 zur Fläche des Siebelements 32 und der Ausbildung des Deckels 20 wird die Effektivität der Trocknung in der Saugvorrichtung 10 auf einfache Weise erhöht.

### Bezugszeichenliste

- 10: Saugvorrichtung
- 12: Prozessrichtung
- 14: Saugkörper
- 14a: Vorderwand
- 14b: Rückwand
- 14c: Seitenwand
- 16: erste Eingangsöffnung
- 18: zweite Eingangsöffnung
- 20: Deckel
- 20a: Deckelöffnung des Deckels 20
- 20b: Scharnier des Deckels 20
- 20c: Griff des Deckels 20
- 22: Förderelement
- 22a: Rotationsache des Förderelements 22
- 22b: Trennwand des Förderelements 22
- 22c: Gehäuse des Förderelements 22
- 22d: Zylinderoberfläche
- 24: Befestigungsmittel
- 26: Kanalseitenwand
- 28: Absaugkanal
- 32: Siebelement
- 32a: erste Längsseite des Siebelements 32
- 32b: zweite Längsseite des Siebelements 32
- 32c: erste Kopfseite des Siebelements 32
- 32d: zweite Kopfseite des Siebelements 32
- 34: Schlitz
- 36: Verbindungsaufnahme
- 36a: Befestigungselement der Verbindungsaufnahme 36

## Patentansprüche

1. Saugvorrichtung (10) zum Trocknen mindestens eines Kunststoffstrangs, umfassend ein Sauggehäuse (14), bestehend aus einer Oberseite, einer Unterseite und mehreren Seitenflächen (14a, 14b, 14c), wobei die Oberseite eine Einlassöffnung und eine der weiteren Flächen eine Auslassöffnung (28) für das Durchströmen eines Trocknungsmediums aufweist, einem Siebelement (32) mit einem Trocknungsbereich, in dem verteilt Durchgangsöffnungen (34) eingebracht sind und der eine Grundfläche aus einer maximalen Länge und einer maximalen Breite aufweist, wobei jede Durchgangsöffnung (34) eine Öffnungsquerschnittsfläche aufweist und die Summe der Öffnungsquerschnittsflächen aller Durchgangsöffnungen des Siebelements (32) zusammen eine Gesamtöffnungsquerschnittsfläche bildet, wobei das Siebelement (32) an der Oberseite und mit seinem Trocknungsbereich über der Einlassöffnung des Sauggehäuses (14) angeordnet ist, wobei der mindestens eine Kunststoffstrang in einer Prozessrichtung (12) auf dem Siebelement (32) bewegt ist, wobei die Prozessrichtung (12) in einer Längsrichtung des Siebelements (32) ausgerichtet ist, **dadurch gekennzeichnet, dass** die Länge des Trocknungsbereichs zumindest 150 mm beträgt und ein Verhältnis von Gesamtöffnungsquerschnittsfläche der Durchgangsöffnungen (34) zur Grundfläche des Trocknungsbereichs im Bereich von 30 - 45 %, insbesondere 35 - 40%, des Trocknungsbereichs liegt.

2. Saugvorrichtung nach Anspruch 1, **dadurch gekennzeichnet, dass** die Länge des Trocknungsbereichs zumindest 200 mm und das Verhältnis von Gesamtöffnungsquerschnittsfläche der Durchgangsöffnungen (34) zur Grundfläche des Trocknungsbereichs weiterhin im Bereich von 30 - 45 %, insbesondere 35 - 40%, liegt, und/oder dass die Grundfläche des Trocknungsbereichs des Siebelements (32) und eine Grundfläche des Siebelements (32) identisch oder nahezu identisch sind.

3. Saugvorrichtung nach Anspruch 1 oder 2, **dadurch gekennzeichnet, dass** die Durchgangsöffnungen (34) schlitzförmig ausgebildet sind und eine größere Länge als Breite aufweisen, vorzugsweise dass die Länge der Durchgangsöffnungen (34) quer zur Prozessrichtung (12) verläuft.

4. Saugvorrichtung nach Anspruch 3, **dadurch gekennzeichnet, dass** die Länge einer Durchgangsöffnung (34) kleiner ist als die Breite des Trocknungsbereichs.

5. Saugvorrichtung nach einem der Ansprüche 3 oder 4, **dadurch gekennzeichnet, dass** die Durchgangsöffnungen (34) eine Breite in einem Bereich von einschließlich 2 mm bis einschließlich 5 mm aufweisen.

6. Saugvorrichtung nach einem der Ansprüche 3 bis 5, **dadurch gekennzeichnet, dass** die Durchgangsöffnungen (34) quer zur Prozessrichtung (12) nebeneinander ausgerichtet sind, und/oder dass mehrere Reihen von Durchgangsöffnungen (34) vorgesehen sind, welche in ihrer Längsrichtung zueinander parallel ausgerichtet sind.

7. Saugvorrichtung nach Anspruch 6, **dadurch gekennzeichnet, dass** nebeneinander angeordnete Durchgangsöffnungen (34) einen Abstand in einem Bereich von einschließlich 8 mm bis einschließlich 30 mm aufweisen.

8. Saugvorrichtung nach Anspruch 6 oder 7, **dadurch gekennzeichnet, dass** die Reihen von Durchgangsöffnungen (34) einen Abstand in einem Bereich von einschließlich 0 bis einschließlich 50 mm aufweisen.

9. Saugvorrichtung nach einem der vorangehenden Ansprüche, **dadurch gekennzeichnet, dass** das Siebelement (32) aus einem Blech gebildet ist, insbesondere dass das Siebelement (32) aus einem nicht rostenden Stahl, insbesondere Edelstahl oder gehärtetem Stahl gebildet ist.

10. Saugvorrichtung nach einem der vorangehenden Ansprüche, **dadurch gekennzeichnet, dass** die Durchgangsöffnungen (34) mittels eines Lasers in das Siebelement (32) eingebracht sind, und/oder dass das Siebelement (32) mehrteilig ausgebildet ist und die Teilelemente sandwichartig übereinandergelegt werden.

11. Saugvorrichtung nach einem der vorangehenden Ansprüche, **dadurch gekennzeichnet, dass** ein den gesamten Trocknungsbereich des Siebelements (32) an der der Einlassöffnung entfernt gelegenen Seite des Siebelements (32) überdeckendes Abdeckelement (20) vorgesehen ist, wobei das Abdeckelement (20) oberhalb des Siebelements (32) sowie in einem vorbestimmten Abstand zum Siebelement (32) angeordnet ist, insbesondere dass das Abdeckelement (20) an seinen Längsseiten mit dem Sauggehäuse (14) luftdicht verbunden ist.

12. Saugvorrichtung nach Anspruch 11, **dadurch gekennzeichnet, dass** im Abdeckelement (20) mittig in Bezug auf eine Länge des Abdeckelements (20) ein quer zur Prozessrichtung (12) verlaufenden Lüftungsschlitz (20b) vorgesehen ist, so dass das Trocknungsmedium an dem einen Ende des Abdeckelements (20) zwischen Abdeckelement (20) und Siebelement (32), an dem anderen Ende des Abdeckelements (20) zwischen Abdeckelement (20) und Siebelement (32) sowie über den Lüftungsschlitz (20b) in den Trocknungsbereich strömen kann, vorzugsweise dass der Lüftungsschlitz (20b) einen Öffnungsquerschnitt aufweist, der 35 - 45 % der Grundfläche des Trocknungsbereichs des Siebelements (32) / Abdeckelements (20) entspricht, eine Breite von 4 - 5 mm und eine Länge von 40 - 50 mm aufweist.

13. Saugvorrichtung nach einem der vorangehenden Ansprüche, **dadurch gekennzeichnet, dass** die Grundfläche der Oberseite des Sauggehäuses (14) größer ist als die Grundfläche der Unterseite des Sauggehäuses (14).

14. Saugvorrichtung nach einem der vorangehenden Ansprüche, **dadurch gekennzeichnet, dass** eine Absaugeinheit vorgesehen ist, die Trocknungsmedium, insbesondere Umgebungsluft, durch die Einlassöffnung in das Sauggehäuse (14) und durch die Auslassöffnung (28) aus dem Sauggehäuse (14) fördert.

15. Saugvorrichtung nach einem der vorangehenden Ansprüche, **dadurch gekennzeichnet, dass** die Absaugeinheit außerhalb des Sauggehäuses (14) angeordnet ist, und/oder dass das Sauggehäuse (14) mit einem Wasserabscheider (36) in Strömungsrichtung stromabwärts verbunden ist.
